# EUROPÄISCHE PATENTANMELDUNG

(11) **EP 3 875 701 A1**
(43) Veröffentlichungstag der Anmeldung: **08.09.2021**
(21) Anmeldenummer: 20160994.8
(22) Anmeldetag: 04.03.2020
(51) Int. Cl.: E04B 1/76, E04F 13/06, C02F 1/28, B01D 39/20, B01D 39/08, B01D 39/16, E04D 13/04, E04D 13/08

(54) **FLÜSSIGKEITSDURCHLÄSSIGES GEWIRK-, GEWEBE-, GESTRICK- UND/ODER VLIESBEHÄLTNIS, FLÜSSIGKEITSDURCHLÄSSIGES FILTERBEHÄLTNIS UND FLÜSSIGKEITSDURCHLÄSSIGES FILTERBEHÄLTNIS-MODUL UND DEREN VERWENDUNG SOWIE GEBÄUDEWAND, DACHRINNE, DACHRINNENFALLROHR UND GEBÄUDEABTROPFKANTE**

(71) Anmelder: DAW SE, 64372 Ober-Ramstadt (DE)
(72) Erfinder: KRAMBERGER-KAPLAN, Helge, 64297 Darmstadt (DE); BISHARA, Ayman, 01069 Dresden (DE)
(74) Vertreter: Metten, Karl-Heinz

(57) **Zusammenfassung**

Die vorliegende Erfindung betrifft eine flüssigkeitsdurchlässiges Gewirk-, Gewebe-, Gestrick- oder Vliesbehältnis, enthaltend Filtermaterial für organische Verbindungen. Ferner betrifft die Erfindung ein flüssigkeitsdurchlässiges Filterbehältnis für die Aufnahme von Filtermaterial für organische Verbindungen, ausgelegt für den Eintritt von von einer Fassade ablaufende Flüssigkeit, wobei der Behältnisboden und die eine Behältniswandung einen Innenraum ausbilden, ausgelegt, um Filtermaterial für organische Verbindungen aufzunehmen. Außerdem betrifft die Erfindung ein flüssigkeitsdurchlässiges Filterbehältnis-Modul, umfassend ein erfindungsgemäßes flüssigkeitsdurchlässiges Gewirk-, Gewebe-, Gestrick- oder Vliesbehältnis oder ein erfindungsgemäßes flüssigkeitsdurchlässiges Filterbehältnis und eine Fassadenbasisschiene, ausgelegt, um an eine Fassade angebracht zu werden. Des Weiteren betrifft die Erfindung eine Gebäudewand, Dachrinne, Dachrinnenfallrohr und Gebäudeabtropfkante, jeweils umfassend ein erfindungsgemäßes flüssigkeitsdurchlässiges Gewirk-, Gewebe-, Gestrick- oder Vliesbehältnis oder ein erfindungsgemäßes flüssigkeitsdurchlässiges Filterbehältnis oder Filterbehältnis-Modul. Schließlich betrifft die Erfindung die Verwendung der vorangehend genannten erfindungsgemäßen Gegenstände für die Reduzierung des Gehalts an organischen Verbindungen im Ablaufwasser von Fassaden oder von Dächern oder von Gebäudeabtropfkanten.

## Beschreibung

Die vorliegende Erfindung betrifft ein flüssigkeitsdurchlässiges Gewirk-, Gewebe-, Gestrick- und/oder Vliesbehältnis enthaltend Filtermaterial für organische Verbindungen, vorzugsweise für organische biozide Verbindungen und insbesondere für wasserlösliche organische biozide Verbindungen, sowie ein flüssigkeitsdurchlässiges Filterbehältnis für die Aufnahme von Filtermaterial für organische Verbindungen, vorzugsweise für organische biozide Verbindungen und insbesondere für wasserlösliche organische biozide Verbindungen. Ferner betrifft die Erfindung ein flüssigkeitsdurchlässiges Filterbehältnis-Modul. Weiterhin betrifft die Erfindung eine Gebäudewand sowie eine Dachrinne, ein Dachrinnenfallrohr und eine Gebäudeabtropfkante, jeweils ausgestattet mit oder enthaltend das flüssigkeitsdurchlässige Gewirk-, Gewebe-, Gestrick- und/oder Vliesbehältnis oder das flüssigkeitsdurchlässige Filterbehältnis oder das Filterbehältnis-Modul. Schließlich betrifft die Erfindung Verwendungen des flüssigkeitsdurchlässigen Gewirk-, Gewebe-, Gestrick- und/oder Vliesbehältnisses, des flüssigkeitsdurchlässigen Filterbehältnisses und des Filterbehältnis-Moduls.

Zur Verbesserung des Wärme- und Dämmschutzes und der Einsparung von Energie werden zunehmend Wärmedämmverbundsysteme an Außenfassaden eingesetzt. Diese benötigen zur Anbringung an der Fassade und auch im Bereich von Fenster- und Türöffnungen Fassadenbasis- bzw. Sockelschienen bzw. Fenster- oder Sohlbänke. Diese und andere Anschlussbereiche bieten Regen- und Tauwasser die Möglichkeit, sich dort anzusammeln und in das Mauerwerk bzw. die Putzschichten einzudringen. Die dadurch entstehenden Bauschäden hygrothermischer Art begünstigen das Wachstum von Mikroorganismen und führen zu Algenbewuchs und Schimmelpilzen, was neben einer wenig ansehnlichen Außenfassade auch zu einem maroden Mauerwerk und gesundheitlichen Folgen für die Bewohner führen kann.

Des Weiteren führt der Einsatz von Wärmedämmverbundsystemen an Außenfassaden zu einer verstärkten Tauwasserbildung, da Wärmeenergie aus dem Gebäudeinneren effektiv daran gehindert wird, in Richtung der Außenfassade zu entweichen. Eine kühlere Außenfassade hat zur Folge, dass die Taupunktemperatur häufiger erreicht bzw. unterschritten wird. Die in der Folge an der Außenfassade sich ansammelnde Flüssigkeit ermöglicht das versteckte Wachstum von Algen und Schimmel.

Um den vorangehend genannten Phänomenen vorzubeugen, werden seit Jahren Biozide in Beschichtungssysteme und Putze eingebracht. Es hat sich jedoch gezeigt, dass diese Biozide durch Regenwasser wie auch durch Tauwasser nach und nach ausgewaschen werden können. Das mit Bioziden angereicherte Regen- und Tauwasser sammelt sich insbesondere im Bereich der Fassadenbasisschienen nahe am Erdboden und gelangt schlussendlich in das Grundwasser. Aber nicht nur die Biozide, auch andere wasserlösliche chemische, insbesondere organische, Stoffe von Fassadenfarben können auf diese Weise ins Grundwasser gelangen.

Die aus dem Stand der Technik bekannten Sockelschienen für Wärmedämmverbundsysteme, aber auch Montagesysteme für den Einbau von Fenster- bzw. Sohlbänken begünstigen oft die Ansammlung von Regen- oder Tauwasser aufgrund der fehlenden Möglichkeit des Abfließens. Auch weisen diese Systeme den Nachteil auf, dass der Eintritt von Bioziden und anderen Schadstoffen in das Grundwasser nicht verhindert wird.

Der vorliegenden Erfindung lag daher die Aufgabe zu Grunde, ein System zur Verfügung zu stellen, das nicht mehr mit den Nachteilen des Stands der Technik behaftet ist und das insbesondere das Eindringen von ausgewaschenen Bioziden und anderen chemischen Verbindungen in den Boden und/oder das Grundwasser verhindert.

Demgemäß wurde ein flüssigkeitsdurchlässiges, insbesondere wasserdurchlässiges, Gewirk-, Gewebe-, Gestrick- und/oder Vliesbehältnis, insbesondere Fassadensockelfiltergewirk-, -gewebe-, -gestrick- und/oder -vliesbehältnis, gefunden, enthaltend mindestens ein Filtermaterial für organische Verbindungen, vorzugsweise für organische biozide Verbindungen und insbesondere für wasserlösliche organische biozide Verbindungen. Ein besonders geeignetes Filtermaterial stellt hierbei Aktivkohle dar. Das Filtermaterial ist demgemäß ausgelegt und eingerichtet, um organische Verbindungen, vorzugsweise organische biozide Verbindungen und insbesondere wasserlösliche organische biozide Verbindungen aus dem Ablaufwasser von insbesondere Fassaden, Dächern und Gebäudeabtropfkanten aufzufangen bzw. zu binden und so aus dem Ablaufwasser, insbesondere möglichst vollständig, zu entfernen.

Das erfindungsgemäße flüssigkeitsdurchlässige Gewirk-, Gewebe-, Gestrick- und/oder Vliesbehältnis stellt vorzugsweise ein Schlauchbehältnis dar bzw. ist Bestandteil eines solchen Schlauchbehältnisses. Alternativ kann zum Beispiel das Gewirk-, Gewebe-, Gestrick- und/oder Vliesmaterial des Gewirk-, Gewebe-, Gestrick- und/oder Vliesbehältnisses eine, insbesondere im Wesentlichen starre, Gerüststruktur ummanteln.

In einer besonders zweckmäßigen Ausführungsform ist das erfindungsgemäße flüssigkeitsdurchlässige, insbesondere wasserdurchlässige, Gewirk-, Gewebe-, Gestrick- und/oder Vliesbehältnis, insbesondere in Form eines Fassadensockelfiltergewirk-, -gewebe-, - gestrick- und/oder -vliesbehältnisses vorliegend, mit einer Befestigungs- oder Haltevorrichtung verbunden, die eingerichtet und ausgelegt ist, um, insbesondere reversibel, an Gebäudefassaden, insbesondere an Fassadensockelprofile, angebracht zu werden.

Es hat sich gezeigt, dass die erfindungsgemäßen Gewirk-, Gewebe-, Gestrick- und/oder Vliesbehältnisse sich zuverlässig und leicht an Gebäudefassaden mit den genannten Befestigung- oder Haltevorrichtungen anbringen lassen. Hierbei kann es sich zum Beispiel um Klebestreifen, Klettverbindungen oder Halteschienen handeln.

Für viele Anwendungen hat es sich als besonders bevorzugt erwiesen, die erfindungsgemäßen Gewirk-, Gewebe-, Gestrick- und/oder Vliesbehältnisse aus Polyamidfasern, Polyesterfasern, insbesondere Polyethylenterephthalat- oder Polybutylenterephthalatfasern, Cellulosefasern, Baumwollfasern, Polyacrylnitrilfasern, Polyolefinfasern, insbesondere Polyethylen- oder Polypropylenfasern, und/oder Aktivkohlefasern zu fertigen. Besonders bevorzugt wird auf Vliesbehältnisse zurückgegriffen, wobei solche enthaltend oder aus Cellulosefasern besonders bevorzugt sind.

Das Filtermaterial kann dabei insbesondere ausgewählt sein aus der Gruppe bestehend aus Aktivkohle, Molekularsieb und deren Mischungen, wobei Aktivkohle besonders bevorzugt ist. Das Filtermaterial kann in Form eines Pulvers, eines Granulats, eines Gewebes oder eines Schwamms eingesetzt werden. Bevorzugt wird hierbei auf Filtermaterialien, insbesondere Aktivkohle, in Granulatform zurückgegriffen. Die erfindungsgemäß eingesetzten Filtermaterialien stellen insbesondere solche dar, die thermisch und/oder chemisch regenerierbar sind.

In einer weiteren Ausführungsform der erfindungsgemäßen flüssigkeitsdurchlässigen Gewirk-, Gewebe-, Gestrick- und/oder Vliesbehältnisse ist vorgesehen, dass diese ferner Füllstoffe und/oder Körnungsmaterial enthalten. Hierbei liegen die Füllstoffe und/oder das Körnungsmaterial vermengt mit dem Filtermaterial, insbesondere Aktivkohle, vor. Es hat sich vielfach als sehr zweckmäßig erwiesen, wenn die Dichte des Filtermaterials und die Dichte der Füllstoffe oder des Körnungsmaterials nicht mehr als etwa 15 %, bevorzugt nicht mehr als etwa 10% und besonders bevorzugt nicht mehr als 5%, voneinander abweichen. Besonders vorteilhaft stimmen die Dichten des Filtermaterials, insbesondere der Aktivkohle, und die Dichte der Füllstoffe oder des Körnungsmaterials im Wesentlichen überein. Bei den vorangehend sowie nachfolgend aufgeführten Dichten handelt es sich um die Schüttdichten der genannten Materialien, jeweils ermittelt gemäß der Norm DIN EN 1097-3:1998-06. Des Weiteren kann für das Filtermaterial auch auf mit Aktivkohle geträgerte Pulver- oder Granulatmaterialien zurückgegriffen werden.

Die der Erfindung zugrunde liegende Aufgabe wird des Weiteren gelöst durch ein flüssigkeitsdurchlässiges Filterbehältnis, insbesondere Fassadensockelfilterbehältnis, beispielsweise Fassadenbasissockelschienenfilterbehältnis, für die Aufnahme von Filtermaterial für organische Verbindungen, vorzugsweise für organische biozide Verbindungen und insbesondere für wasserlösliche organische biozide Verbindungen, wobei Aktivkohle besonders bevorzugt ist, umfassend mindestens eine Behältniswandung, einen Behältnisboden mit Drainageöffnungen und eine dem Behältnisboden gegenüberliegende Behältnisöffnung, ausgelegt und eingerichtet für den Eintritt von von einer Fassade ablaufende Flüssigkeit, wobei der Behältnisboden und die mindestens eine Behältniswandung einen Innenraum ausbilden, ausgelegt und eingerichtet, um das Filtermaterial für organische Verbindungen, insbesondere Aktivkohle, aufzunehmen. Bei dieser Ausführungsform eines erfindungsgemäßen Filterbehältnisses umfasst die mindestens eine Behältniswandung zweckmäßigerweise eine Behältnisvorderwand und eine die Behältnisvorderwand gegenüberliegende Behältnisrückwand sowie gegebenenfalls eine erste Behältnisseitenwand und eine der ersten Behältnisseitenwand gegenüberliegende zweite Behältnisseitenwand. Das erfindungsgemäße Filterbehältnis kann zum Beispiel über eine eckige wie auch über eine gerundete, beispielsweise runde, ovale oder halbrunde, Querschnittsform verfügen. Hierbei können dann z.B. Behältnisvorderwand bzw. Behältnisrückwand im Wesentlichen übergangslos in die erste bzw. zweite Behältnisseitenwand übergehen. Auch können, alternativ oder zusätzlich, z.B. Behältnisvorderwand bzw. Behältnisrückwand im Wesentlichen übergangslos in den Behältnisboden übergehen.

Auch für das vorangehend genannte flüssigkeitsdurchlässige Filterbehältnis, insbesondere Fassadensockelfilterbehältnis, beispielsweise Fassadenbasissockelschienenfilterbehältnis, hat es sich als besonders zweckmäßig erwiesen, dieses mit einer, insbesondere über die Behältniswandung, verbundenen Befestigungs- oder Haltevorrichtung auszustatten, die eingerichtet und ausgelegt ist, um, insbesondere reversibel, an Gebäudefassaden, insbesondere an Fassadensockelprofile, angebracht zu werden. Dies gestattet eine sehr einfache und zuverlässige Anbringung, die auch von Laien vorgenommen werden kann.

Bei der Befestigungs- oder Haltevorrichtung kann es sich zum Beispiel um eine Vorrichtung handeln, die eingerichtet und ausgelegt ist zum Aufhängen, Einrasten und/oder Einschieben an bzw. in korrespondierende Befestigungsvorrichtungen an Fassaden.

Besonders vorteilhaft sind Systeme, bei denen die Vorrichtung in korrespondierende Befestigungsvorrichtungen von Fassadenbasisschienen aufgehängt oder eingerastet werden können. Auf diese Weise kann das erfindungsgemäße Filterbehältnis, insbesondere Fassadensockelfilterbehältnis, auch nachträglich montiert werden, ohne dass ein kompletter Umbau der Fassade oder des Dachs notwendig ist, beispielsweise nach Anbringung eines neuen Farbanstrichs.

Bevorzugt wird das erfindungsgemäße Filterbehältnis bei Fassadenbasissockelschienen eingesetzt, es ist aber auch der Einsatz in Dachrinnen, Fallrohren, Fenster- oder Sohlbänken und an Abtropfkanten möglich. Aufgrund der Drainageöffnungen in dem Behältnisboden kann das Regen- oder Tauwasser ablaufen, sodass die Ansammlung von Wasser an Fassaden und die daraus resultierenden hygrothermischen Bauschäden vermieden werden. Die herausgewaschenen organischen Verbindungen, vorzugsweise die organischen bioziden Verbindungen und insbesondere die wasserlöslichen organischen bioziden Verbindungen bleiben jedoch im Filtermaterial des Fassadensockelfilterbehältnisses hängen bzw. werden dort adsorbiert. Es gelangt folglich nur gefiltertes Regen- oder Tauwasser in den Boden und somit in den Wasserkreislauf.

Grundsätzlich kann das erfindungsgemäße Filterbehältnis, insbesondere Fassadensockelfilterbehältnis, beispielsweise Fassadenbasissockelschienenfilterbehältnis, in jeglicher Form ausgebildet sein. Bevorzugt sind jedoch Ausführungsformen, bei denen zumindest die Behältnisrückwand flach ausgebildet ist. Unter Behältnisrückwand der vorliegenden Erfindung sollen die Behältniswand verstanden werden, die an die Fassade oder das Dach angrenzt. Fassaden oder Dächer schließen zumeist mit einer flachen Seite bzw. Kante ab, sodass das erfindungsgemäße Filterbehältnis, insbesondere Fassadensockelfilterbehältnis, mit einer flachen Behältnisrückwand bündig an diese angebracht werden kann. Es hat sich weiterhin als vorteilhaft erwiesen, wenn das erfindungsgemäße Filterbehältnis, insbesondere Fassadensockelfilterbehältnis, an der Behältnisvorderwand einen Steg am oberen Ende aufweist, welcher in Richtung des Innenraums geneigt ist. Die Behältnisvorderwand des Filterbehältnisses der vorliegenden Erfindung ist demnach die Behältniswand, die nicht in Richtung der Fassade oder des Dachs, sondern von dieser weg zeigt. Der zumeist schmale nach innen geneigte Steg an der Behältnisvorderwand ermöglicht einen positionsfesten Sitz des Filtermaterials für organische Verbindungen, vorzugsweise für organische biozide Verbindungen, insbesondere Aktivkohle, und verhindert ein Verrutschen oder bei Starkregen gar ein Ausspülen das Filtermaterials. Besonders gut geeignet sind dabei solche Filterverhältnissw, insbesondere Fassadensockelfilterbehältnisse, bei denen der Steg am oberen Ende mit der Behältnisvorderwand einen Winkel, insbesondere kleiner oder gleich 90°, einschließt.

Das erfindungsgemäße Filterbehältnis, insbesondere Fassadensockelfilterbehältnis, beispielsweise Fassadenbasissockelschienenfilterbehältnis, kann in Teilen oder vollständig aus Kunststoff, Metall oder Holz gefertigt sein. In bevorzugten Ausgestaltungsformen ist das erfindungsgemäße Filterbehältnis aus demselben Material wie die Befestigungs- oder Haltevorrichtung, insbesondere die Fassadenbasisschiene, ausgebildet. Die Befestigung des erfindungsgemäßen Filterbehältnisses, insbesondere Fassadensockelfilterbehältnisses über die Befestigungsvorrichtung an der Fassadenbasisschiene ist dann besonders gut möglich, wenn ein vorgegebener korrespondierender Einrast- oder Aufhängmechanismus, insbesondere aus Kunststoff oder Metall an beiden zu verbindenden Systemen bereits vorgegeben ist. Die Wahl des Materials kann z.B. von der Art des Hauses bzw. der Fassade abhängig gemacht werden, sodass dieses keinen störenden Einfluss auf den optischen Gesamteindruck hat.

Im Falle eines Holzhauses kann das erfindungsgemäße Filterbehältnis, insbesondere Fassadensockelfilterbehältnis, bevorzugt aus Holz gefertigt werden. Dabei sollten die ausgewählten Materialien resistent gegen Wasser und Feuchte sein. Filterbehältnisse aus Holz können zum Beispiel eine wasserfeste Lackierung, die das Eindringen von Wasser und das Aufquellen des Holzes verhindert, aufweisen. Filterbehältnisse aus Metall sind bevorzugt aus rostfreien Materialien, wie beispielsweise Edelstahl, ausgebildet. Im Falle aller Materialien ist weiterhin bevorzugt, auf solche zurückzugreifen, die nicht von den organisch chemischen Schadstoffen oder Bioziden angegriffen werden können und/oder UV-beständig sind.

In einer besonders zweckmäßigen Ausführungsform verfügt das erfindungsgemäße flüssigkeitsdurchlässige Filterbehältnis über eine bei gattungsgemäßer Verwendung unterhalb der Drainageöffnungen des Behältnisbodens vorliegende, aus der Horizontalen geneigte Flüssigkeitsablaufschiene, die insbesondere eingerichtet und ausgelegt ist, um die den Drainageöffnungen entstammende Flüssigkeit in Richtung der Fassade abzuleiten. Demgemäß kann diese Flüssigkeitsablaufschiene bis nahezu an die Fassade heranreichen, sodass zwisehen der Ablaufkante dieser Schiene und der Fassade ein hinreichender Spalt verbleibt.

In dem Innenraum des erfindungsgemäßen flüssigkeitsdurchlässigen Filterbehältnisses liegt bevorzugt bereits ein Filtermaterial für organische Verbindungen, vorzugsweise für organische biozide Verbindungen und insbesondere für wasserlösliche organische biozide Verbindungen, vor. Besonders bevorzugt wird hierfür auf Aktivkohle zurückgegriffen. Alternativ kann dieser Innenraum das erfindungsgemäße flüssigkeitsdurchlässige, insbesondere wasserdurchlässige, Gewirk-, Gewebe-, Gestrick- und/oder Vliesbehältnis aufweisen.

Das Filtermaterial kann dabei in einer Ausführungsform fest in das Filterbehältnis, insbesondere Fassadensockelfilterbehältnis, beispielsweise Fassadenbasissockelschienenfilterbehältnis, integriert sein. In einer besonders bevorzugten Ausgestaltung ist das Filtermaterial darin austauschbar angebracht.

Das umhüllende Material zum Ummanteln des Filtermaterials kann dabei prinzipiell Kunststoff, Metall, Vlies oder Gewebe, insbesondere Textilgewebe, umfassen und ist zweckmäßigerweise flüssigkeitsdurchlässig ausgebildet, sodass das Regen- oder Tauwasser an das Filtermaterial gelangen kann. Alternativ ist auch ein flüssigkeitsdurchlässiger Behälter aus Kunststoff, Metall oder Gewebe möglich.

Weiterhin wird die der Erfindung zugrunde liegende Aufgabe gelöst durch ein Flüssigkeitsdurchlässiges Filterbehältnis-Modul, insbesondere Fassadensockelfilterbehältnis-Modul, umfassend das erfindungsgemäße flüssigkeitsdurchlässige Gewirk-, Gewebe-, Gestrick- und/oder Vliesbehältnis oder das erfindungsgemäße flüssigkeitsdurchlässige Filterbehältnis und eine Fassadenbasisschiene, eingerichtet und ausgelegt, um an eine Fassade, insbesondere an ein Fassadensockelprofil für Abdeckplatten von Gebäudefassaden oder an ein Fassadensockelprofil für ein Wärmedämmverbundsystem, angebracht zu werden.

In bevorzugten Ausgestaltungen ist die Fassadenbasisschiene als Fassadensockelprofil für Abdeckplatten von Gebäudewänden oder für ein Wärmedämmverbundsystem ausgebildet. Besonders vorteilhaft ist es dabei, wenn das Filterbehältnis, insbesondere Fassadensockelfilterbehältnis, beispielsweise Fassadenbasissockelschienenfilterbehältnis, reversibel mit der Fassadenbasisschiene verbunden oder verbindbar ist. Im Falle eines Umbaus können beide Systeme andernorts separat eingesetzt werden. In einer geeigneten Ausführungsform können das Filterbehältnis, insbesondere das Fassadensockelfilterbehältnis, und die Fassadenbasisschiene einstückig ausgebildet sein.

Die der Erfindung zugrunde liegende Aufgabe wird des Weiteren durch eine Gebäudewand, insbesondere eine außenseitig wärmegedämmte Gebäudewand, umfassend mindestens ein, insbesondere austauschbares, erfindungsgemäßes flüssigkeitsdurchlässiges Gewirk-, Gewebe-, Gestrick- und/oder Vliesbehältnis und/oder mindestens ein erfindungsgemäßes flüssigkeitsdurchlässiges Filterbehältnis, insbesondere Fassadensockelfilterbehältnis, oder mindestens ein erfindungsgemäßes Filterbehältnis-Modul. Bevorzugt kommt hierbei ein austauschbares Filterbehältnis-Modul, insbesondere Fassadensockelfilterbehältnis-Modul, zum Einsatz. In einer zweckmäßigen Ausgestaltung der erfindungsgemäßen Gebäudewand verläuft das erfindungsgemäße Filterbehältnis oder das erfindungsgemäße flüssigkeitsdurchlässiges Gewirk-, Gewebe-, Gestrick- und/oder Vliesbehältnis nach der Befestigung mit der Befestigungsvorrichtung an der Fassadenbasisschiene im Wesentlichen bündig mit der Gebäudewand. Alternativ kann das erfindungsgemäße Filterbehältnis, insbesondere das Fassadensockelfilterbehältnis, oder das erfindungsgemäße flüssigkeitsdurchlässige Gewirk-, Gewebe-, Gestrick- und/oder Vliesbehältnis nach der Befestigung zu der Gebäudewand hervorstehend verlaufen.

Ferner wird die der Erfindung zugrunde liegende Aufgabe gelöst durch eine Dachrinne, ein Dachrinnenfallrohr oder eine Gebäudeabtropfkante, insbesondere Gebäudeabtropfkante, ausgestattet mit oder enthaltend mindestens ein, insbesondere austauschbares, erfindungsgemäßes flüssigkeitsdurchlässiges Gewirk-, Gewebe-, Gestrick- und/oder Vliesbehältnis und/oder mindestens ein erfindungsgemäßes flüssigkeitsdurchlässiges Filterbehältnis, insbesondere Fassadensockelfilterbehältnis, oder mindestens ein erfindungsgemäßes Filterbehältnis-Modul. Hierbei kann das erfindungsgemäße flüssigkeitsdurchlässige Filterbehältnis, insbesondere Fassadensockelfilterbehältnis, einen Behältnisboden mit Drainageöffnungen, eine dem Behältnisboden gegenüberliegende Behältnisöffnung, ausgelegt und eingerichtet für den Eintritt von Flüssigkeit, mindestens einer Behältniswandung, gegebenenfalls umfassend eine Behältnisvorderwand und eine der Behältnisvorderwand gegenüberliegende Behältnisrückwand, sowie gegebenenfalls eine erste Behältnisseitenwand und eine der ersten Behältnisseitenwand gegenüberliegende zweite Behältnisseitenwand umfassen, wobei der Behältnisboden und die mindestens eine Behältniswandung einen Innenraum ausbilden, ausgelegt und eingerichtet, um Filtermaterial, insbesondere Aktivkohle, aufzunehmen, und um Flüssigkeit durch das Filtermaterial hindurchtreten zu lassen. Das Fassadensockelfilterbehältnis, beispielsweise Fassadenbasissockelschienenfilterbehältnis, kann dabei zum Beispiel über eine eckige wie auch über eine gerundete, beispielsweise runde, ovale oder halbrunde, Querschnittsform verfügen. Hierbei können dann z.B. Behältnisvorderwand bzw. Behältnisrückwand im Wesentlichen übergangslos in die erste bzw. zweite Behältnisseitenwand übergehen. Auch können, alternativ oder zusätzlich, z.B. Behältnisvorderwand bzw. Behältnisrückwand im Wesentlichen übergangslos in den Behältnisboden übergehen.

Mit der vorliegenden Erfindung ist ferner der Einsatz der erfindungsgemäßen flüssigkeitsdurchlässigen, insbesondere wasserdurchlässigen, Gewirk-, Gewebe-, Gestrick- und/oder Vliesbehältnisse oder von flüssigkeitsdurchlässigen Gewirk-, Gewebe-, Gestrick- und/oder Vliesmaterialien enthaltend oder bestehend aus Aktivkohlefasern für die, insbesondere reversible, Anbringung an Gebäudefassaden, insbesondere an Fassadensockelprofile, oder in Dachrinnen oder in Fallrohren, insbesondere im Bereich von Revisionsöffnungen, oder an Dachziegelunterkanten oder an Gebäudeabtropfkanten vorgesehen wie auch der Einsatz für die Reduzierung des Gehalts an organischen Verbindungen, vorzugsweise an organischen bioziden Verbindungen und insbesondere an wasserlöslichen organischen bioziden Verbindungen im Ablaufwasser von Fassaden oder von Dächern oder von Gebäudeabtropfkanten. Demgemäß können mit der vorliegenden Erfindung durch die Verwendung von Aktivkohle oder von Molekularsieben der Gehalt an den genannten organischen Verbindungen im Ablaufwasser von Fassaden, im Abtropf- bzw. Ablaufwasser von Gebäudeabtropfkanten, im Regenwasser in Regenrinnen und im Regenwasser in Regenrinnenfallrohren reduziert oder gar eliminiert werden.

Ferner ist mit der vorliegenden Erfindung die Verwendung der erfindungsgemäßen flüssigkeitsdurchlässigen, insbesondere wasserdurchlässigen, Gewirk-, Gewebe-, Gestrick- und/oder Vliesbehältnisse oder des erfindungsgemäßen flüssigkeitsdurchlässigen Filterbehältnisses oder des erfindungsgemäßen Filterbehältnis-Moduls oder der erfindungsgemäßen Gebäudewand für die Reduzierung des Gehalts an organischen Verbindungen, vorzugsweise an organischen bioziden Verbindungen und insbesondere an wasserlöslichen organischen bioziden Verbindungen, im Ablaufwasser von Fassaden oder von Dächern vorgesehen wie auch die Verwendung der erfindungsgemäßen Dachrinne oder des erfindungsgemäßen Dachrinnenfallrohrs für die Reduzierung des Gehalts an den genannten organischen Verbindungen im Regenwasser in Regenrinnen bzw. im Regenwasser in Regenrinnenfallrohren. Außerdem ist mit der vorliegenden Erfindung der Einsatz der erfindungsgemäßen Gebäudeabtropfkante für die Reduzierung des Gehalts an organischen Verbindungen, vorzugsweise an organischen bioziden Verbindungen und insbesondere an wasserlöslichen organischen bioziden Verbindungen, im Abtropf- bzw. Ablaufwasser von Gebäudeabtropfkanten vorgesehen. Schließlich betrifft die Erfindung auch die Verwendung von Aktivkohle und/oder Molekularsieben, insbesondere Aktivkohle, für die Reduzierung des Gehalts an organischen Verbindungen, vorzugsweise an organischen bioziden Verbindungen und insbesondere an wasserlöslichen organischen bioziden Verbindungen, im Ablaufwasser von Fassaden, im Ablaufwasser von Dächern, im Abtropf- bzw. Ablaufwasser von Gebäudeabtropfkanten, im Regenwasser in Regenrinnen und/oder im Regenwasser in Regenrinnenfallrohren, vorzugsweise im Ablaufwasser von Fassaden, im Ablaufwasser von Dächern und/oder im Abtropf- bzw. Ablaufwasser von Gebäudeabtropfkanten.

Mit der vorliegenden Erfindung geht die überraschende Erkenntnis einher, dass der Eintritt mittels Regen- und/oder Tauwasser ausgewaschener Biozide und anderer chemischer, insbesondere organischer, Verbindungen an und/oder aus Gebäudebeschichtungen in den Boden, in Oberflächengewässer und insbesondere in das Grundwasser mit den erfindungsgemäßen Vorrichtungen signifikant zurückgedrängt oder sogar verhindert werden kann. Mit der vorliegenden Erfindung wird die Möglichkeit geschaffen, solche Systeme auch nachträglich an die Fassade, das Dach oder die Fensterbänke montieren zu können. Demgemäß gelingt es mit der vorliegenden Erfindung, kostengünstig und ohne großen apparativen Aufwand die Umwelt und das Grundwasser zu schützen.

Weitere Merkmale und Vorteile der Erfindung ergeben sich aus der nachfolgenden Beschreibung, in der Ausführungsbeispiele der Erfindung anhand einer schematischen Zeichnung beispielhaft erläutert werden, ohne dadurch die Erfindung zu beschränken. Dabei zeigen:
- Figur 1: eine perspektivische schematische Darstellung einer Ausführungsform des erfindungsgemäßen Fassadensockelfilterbehältnisses;
- Figur 2: eine schematische Seitenansicht der in Figur 1 gezeigten Ausführungsform des erfindungsgemäßen Fassadensockelfilterbehältnisses;
- Figur 3: eine perspektivische schematische Darstellung einer Ausführungsform des erfindungsgemäßen Fassadensockelfilterbehältnis-Moduls;
- Figur 4: eine schematische Seitenansicht der in Figur 3 gezeigten Ausführungsform des erfindungsgemäßen Fassadensockelfilterbehältnis-Moduls; und
- Figur 5: eine perspektivische schematische Darstellung einer Ausführungsform des erfindungsgemäßen Fassadensockelfilterbehältnis-Moduls an einer Gebäudeabtropfkante.

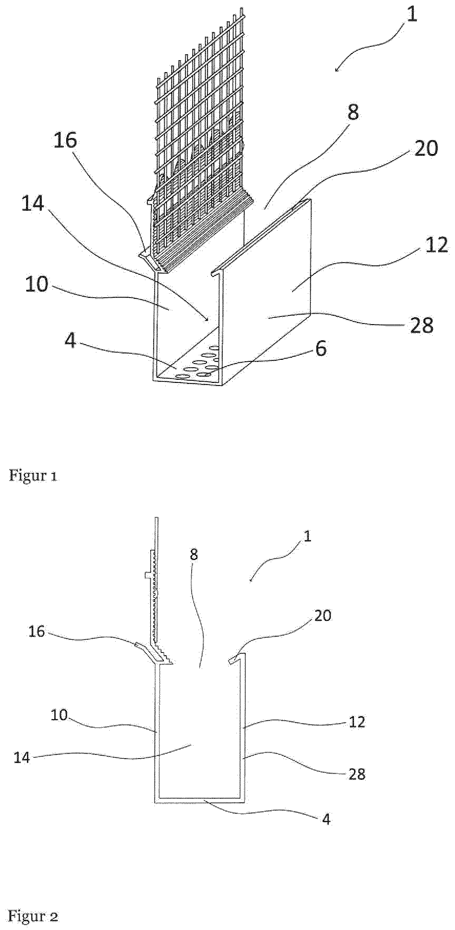

Figur 1 entnimmt man in schematischer perspektivischer Ansicht eine Ausführungsform des erfindungsgemäßen Fassadensockelfilterbehältnisses bzw. Fassadenbasissockelschienenfilterbehältnisses 1. Dabei umfasst das Fassadensockelfilterbehältnis 1 mindestens eine Behältniswandung 28, einen Behältnisboden 4 mit Drainageöffnungen 6 und eine dem Behältnisboden 6 gegenüberliegende Behältnisöffnung 8, wobei die mindestens eine Behältniswandung 28 in der gezeigten Ausführungsform eine Behältnisvorderwand 12, eine Behältnisrückwand 10 und zwei behältnisseitenwände ausgebildet ist. Die beiden Behältnisseitenwände sind der Übersichtlichkeit halber nicht gezeigt, bilden aber zusammen mit der Behältnisvorderwand 12, der Behältnisrückwand 10 und dem Behältnisboden 4 einen Innenraum 14 aus zur Aufnahme von Filtermaterial 2 (nicht gezeigt) für organische biozide Verbindungen. Weiterhin zeigt das dargestellte Fassarlensockelfilterbehältnis 1 eine Befestigungsvorrichtung 16 zur Anbringung an einer Fassadenbasisschiene. Die Behältnisvorderwand 12 umfasst weiterhin einen Steg 20 an der Oberkante ausgelegt und eingerichtet, das Filtermaterial 2 am Verrutschen zu hindern.

Figur 2 zeigt die schematische Seitenansicht der in Figur 1 gezeigten Ausführungsform des erfindungsgemäßen Fassadensockelfilterbehältnisses 1.

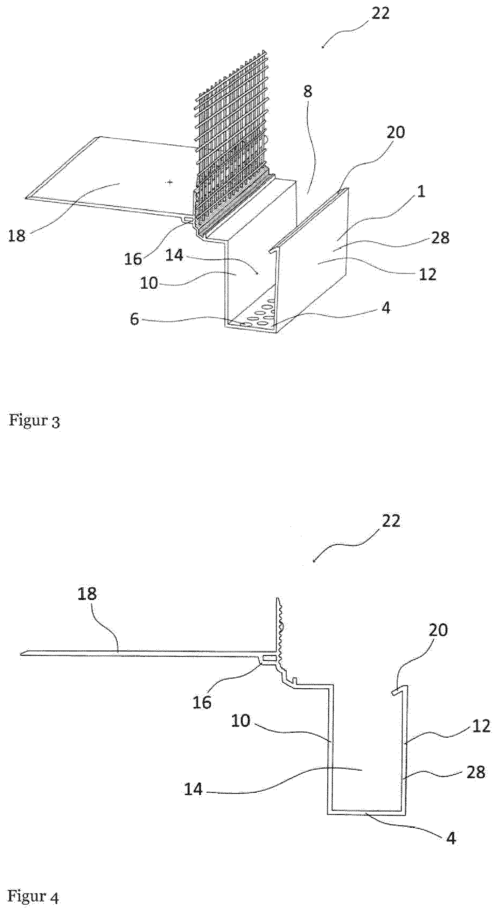

Figur 3 offenbart in schematischer perspektivischer Ansicht eine Ausführungsform des erfindungsgemäßen Fassadensockelfilterbehältnis-Moduls 22, wobei ein Fassadensockelfilterbehältnis bzw. Fassadenbasissockelschienenfilterbehältnis 1 lösbar mit einer Fassadenbasisschiene 18 verbunden ist. Das Fassadensockelfilterbehältnis 1 unterscheidet sich von dem in Figur 1 dadurch, dass an der Behältnisrückwand 10 ein zusätzlicher horizontaler Steg angebracht ist.

Figur 4 zeigt eine schematische Seitenansicht der in Figur 3 gezeigten Ausführungsform des erfindungsgemäßen Fassadensockelfilterbehältnis-Moduls 22.

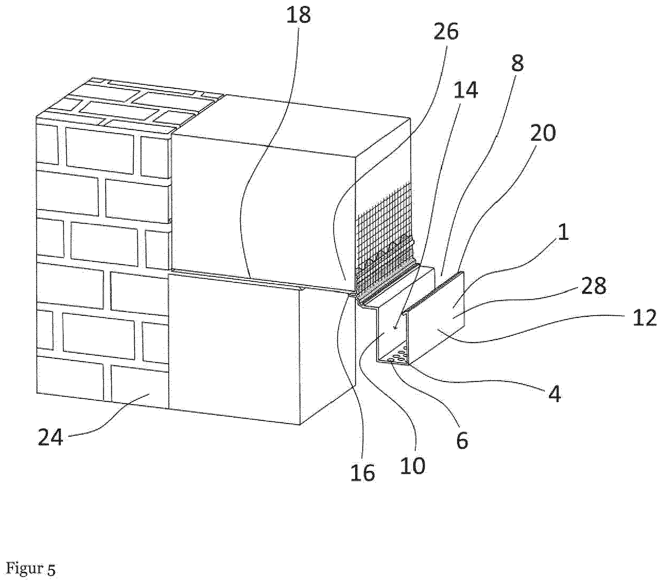

Figur 5 zeigt eine perspektivische schematische Darstellung einer Ausführungsform des erfindungsgemäßen Fassadensockelfilterbehältnis-Moduls 22 umfassend ein erfindungsgemäßes Fassadensockelfilterbehältnis bzw. Fassadenbasissockelschienenfilterbehältnis 1 und eine Fassadenbasisschiene 18 an einer Gebäudeabtropfkante 26 an einer Gebäudewand 24.

Mit den in den Figuren dargestellten erfindungsgemäßen Fassadensockelfilterbehältnissen 1 bzw. Fassadensockelfilterbehältnis-Modulen 22 wird eine sehr wirksame Verhinderung des Eindringens von Bioziden und anderen chemischen, insbesondere organischen, Schadstoffen in das Grundwasser erreicht.

Die in der voranstehenden Beschreibung, den Ansprüchen und den Zeichnungen offenbarten Merkmale der Erfindung können sowohl einzeln als auch in jeder beliebigen Kombination für die Verwirklichung der Erfindung vorteilhaft sein.

## Patentansprüche

1. Flüssigkeitsdurchlässiges, insbesondere wasserdurchlässiges, Gewirk-, Gewebe-, Gestrick- oder Vliesbehältnis (1), insbesondere Fassadensockelfiltergewirk-,-gewebe-, -gestrick- oder -vliesbehältnis, enthaltend
Filtermaterial (2) für organische Verbindungen, vorzugsweise für organische biozide Verbindungen und insbesondere für wasserlösliche organische biozide Verbindungen.

2. Flüssigkeitsdurchlässiges Gewirk-, Gewebe-, Gestrick- oder Vliesbehältnis (1) nach Anspruch 1, **dadurch gekennzeichnet, dass**
dieses ein Schlauchbehältnis umfasst oder darstellt.

3. Flüssigkeitsdurchlässiges Gewirk-, Gewebe-, Gestrick- oder Vliesbehältnis (1) nach Anspruch 1 oder 2, ferner umfassend
eine mit diesem verbundene Befestigungs- oder Haltevorrichtung, eingerichtet und ausgelegt, um, insbesondere reversibel, an Gebäudefassaden, insbesondere an Fassadensockelprofile, angebracht zu werden, insbesondere ausgewählt aus der Gruppe bestehend aus mindestens einem Klebestreifen, mindestens einer Klettverbindung und mindestens einer Halteschiene sowie Kombinationen hiervon.

4. Flüssigkeitsdurchlässiges Gewirk-, Gewebe-, Gestrick- oder Vliesbehältnis (1) nach einem der vorangehenden Ansprüche, **dadurch gekennzeichnet, dass**
das Gewirk-, Gewebe-, Gestrick- oder Vliesbehältnis aus Polyamidfasern, Polyesterfasern, insbesondere Polyethylenterephthalat- oder Polybutylenterephthalatfasern, Cellulosefasern, Baumwollfasern, Polyacrylnitrilfasern, Polyolefinfasern, insbesondere Polyethylen- oder Polypropylenfasern, und/oder Aktivkohlefasern gefertigt ist.

5. Flüssigkeitsdurchlässiges Gewirk-, Gewebe-, Gestrick- oder Vliesbehältnis (1) nach einem der vorangehenden Ansprüche, ferner umfassend
Füllstoffe und/oder Körnungsmaterial, wobei die Füllstoffe und/oder das Körnungsmaterial vermengt mit dem Filtermaterial (2), insbesondere Aktivkohle, vorliegen.

6. Flüssigkeitsdurchlässiges Gewirk-, Gewebe-, Gestrick- oder Vliesbehältnis (1) nach Anspruch 5, **dadurch gekennzeichnet, dass**
die Dichte des Filtermaterials und die Dichte der Füllstoffe oder des Körnungsmaterials nicht mehr als etwa 15 %, bevorzugt nicht mehr als etwa 10% voneinander abweichen und besonders bevorzugt im Wesentlichen übereinstimmen.

7. Flüssigkeitsdurchlässiges Filterbehältnis (1), insbesondere Fassadensockelfilterbehältnis, für die Aufnahme von Filtermaterial (2) für organische Verbindungen, vorzugsweise für organische biozide Verbindungen und insbesondere für wasserlösliche organische biozide Verbindungen, umfassend
mindestens eine Behältniswandung (28), einen Behältnisboden (4) mit Drainageöffnungen (6) und eine dem Behältnisboden (4) gegenüberliegende Behältnisöffnung (8), ausgelegt und eingerichtet für den Eintritt von von einer Fassade ablaufende Flüssigkeit,
wobei der Behältnisboden (4) und die mindestens eine Behältniswandung (28) einen Innenraum (14) ausbilden, ausgelegt und eingerichtet, um Filtermaterial (2) für die organischen Verbindungen aufzunehmen.

8. Flüssigkeitsdurchlässiges Filterbehältnis (1) nach Anspruch 7, ferner umfassend eine mit diesem, insbesondere über die Behältniswandung (28), verbundene Befestigungs- oder Haltevorrichtung, eingerichtet und ausgelegt, um, insbesondere reversibel, an Gebäudefassaden, insbesondere an Fassadensockelprofile, angebracht zu werden, insbesondere ausgewählt aus der Gruppe bestehend aus mindestens einem Klebestreifen, mindestens einer Klettverbindung und mindestens einer Halteschiene sowie Kombinationen hiervon.

9. Flüssigkeitsdurchlässiges Filterbehältnis (1) nach Anspruch 8, **dadurch gekennzeichnet, dass**
die Befestigungs- oder Haltevorrichtung (16) eine Vorrichtung, eingerichtet und ausgelegt zum Aufhängen, Einrasten und/oder Einschieben an bzw. in korrespondierende Befestigungsvorrichtungen (16) an Fassaden darstellt oder diese umfasst.

10. Flüssigkeitsdurchlässiges Filterbehältnis (1) nach einem der Ansprüche 7 bis 9, ferner umfassend,
in dem Innenraum vorliegend, ein Filtermaterial (2) für organische Verbindungen, vorzugsweise für organische biozide Verbindungen und insbesondere für wasserlösliche organische biozide Verbindungen, oder
das flüssigkeitsdurchlässige, insbesondere wasserdurchlässige, Gewirk-, Gewebe-, Gestrick- oder Vliesbehältnis (1) nach einem der Ansprüche 1 bis 6.

11. Flüssigkeitsdurchlässiges Filterbehältnis (1) nach einem der Ansprüche 7 bis 10,
**dadurch gekennzeichnet, dass**
das Filtermaterial (2) ausgewählt ist aus der Gruppe bestehend aus Aktivkohle, Molekularsieb und deren Mischungen, insbesondere Aktivkohle, wobei das Filtermaterial (2) insbesondere in Form eines Pulvers, eines Granulats, eines Gewebes oder eines Schwamms ausgebildet ist, bevorzugt eines Granulats, und/oder wobei das Filtermaterial (2) vorzugsweise thermisch und/oder chemisch regenerierbar ist.

12. Flüssigkeitsdurchlässiges Filterbehältnis (1) nach Anspruch 10 oder 11, ferner umfassend
Füllstoffe und/oder Körnungsmaterial, wobei die Füllstoffe und/oder das Körnungsmaterial vermengt mit dem Filtermaterial (2), insbesondere Aktivkohle, vorliegen.

13. Flüssigkeitsdurchlässiges Filterbehältnis (1) nach Anspruch 12, **dadurch gekennzeichnet, dass**
die Dichte des Filtermaterials und die Dichte der Füllstoffe oder des Körnungsmaterials nicht mehr als etwa 15%, bevorzugt nicht mehr als etwa 10%, voneinander abweichen und besonders bevorzugt im Wesentlichen übereinstimmen.

14. Flüssigkeitsdurchlässiges Filterbehältnis-Modul (22), insbesondere Fassadensockelfilterbehältnis-Modul, umfassend
- ein flüssigkeitsdurchlässiges Gewirk-, Gewebe-, Gestrick- oder Vliesbehältnis (1) nach einem der Ansprüche 1 bis 6 oder
ein flüssigkeitsdurchlässiges Filterbehältnis (1) nach einem der Ansprüche 7 bis 13 und
- eine Fassadenbasisschiene (18), eingerichtet und ausgelegt, um an eine Fassade, insbesondere an ein Fassadensockelprofil für Abdeckplatten von Gebäudefassaden oder an ein Fassadensockelprofil für ein Wärmedämmverbundsystem, angebracht zu werden.

15. Flüssigkeitsdurchlässiges Filterbehältnis-Modul (22) nach Anspruch 14, **dadurch gekennzeichnet, dass**
das flüssigkeitsdurchlässige Gewirk-, Gewebe-, Gestrick- oder Vliesbehältnis (1) oder das flüssigkeitsdurchlässige Filterbehältnis (1) reversibel mit der Fassadenbasisschiene (18) verbunden oder verbindbar ist oder dass das flüssigkeitsdurchlässige Gewirk-, Gewebe-, Gestrick- oder Vliesbehältnis (1) oder das flüssigkeitsdurchlässige Filterbehältnis (1) und die Fassadenbasisschiene (18) einstückig ausgebildet sind.

16. Gebäudewand (24), insbesondere außenseitig wärmegedämmte Gebäudewand (24), umfassend
mindestens ein, insbesondere austauschbares, flüssigkeitsdurchlässiges Gewirk-, Gewebe-, Gestrick- oder Vliesbehältnis (1) nach einem der Ansprüche 1 bis 6 oder mindestens ein flüssigkeitsdurchlässiges Filterbehältnis (1) nach einem der Ansprüche 7 bis 13 oder mindestens ein Filterbehältnis-Modul (22) nach Anspruch 14 oder 15.

17. Dachrinne, Dachrinnenfallrohr oder Gebäudeabtropfkante (26), insbesondere Gebäudeabtropfkante, ausgestattet mit oder enthaltend
mindestens ein, insbesondere austauschbares, flüssigkeitsdurchlässiges Gewirk-, Gewebe-, Gestrick- oder Vliesbehältnis (1) nach einem der Ansprüche 1 bis 6 oder mindestens ein flüssigkeitsdurchlässiges Filterbehältnis (1) nach einem der Ansprüche 7 bis 13 oder mindestens ein Filterbehältnis-Modul (22) nach Anspruch 14 oder 15.

18. Verwendung des flüssigkeitsdurchlässigen, insbesondere wasserdurchlässigen, Gewirk-, Gewebe-, Gestrick- oder Vliesbehältnisses nach einem der Ansprüche 1 bis 6 oder von flüssigkeitsdurchlässigen Gewirk-, Gewebe-, Gestrick- oder Vliesmaterialien enthaltend oder bestehend aus Aktivkohlefasern
für die, insbesondere reversible, Anbringung an Gebäudefassaden, insbesondere an Fassadensockelprofile, oder an Dachziegelunterkanten oder an Gebäudeabtropfkanten oder
für die Reduzierung des Gehalts an organischen Verbindungen, vorzugsweise an organischen bioziden Verbindungen und insbesondere an wasserlöslichen organischen bioziden Verbindungen im Ablaufwasser von Fassaden oder von Dächern oder von Gebäudeabtropfkanten.

19. Verwendung des flüssigkeitsdurchlässigen Filterbehältnisses (1) gemäß einem der Ansprüche 7 bis 13 oder des Filterbehältnis-Moduls (22) nach Anspruch 14 oder 15 oder der Gebäudewand (24) nach Anspruch 16 für die Reduzierung des Gehalts an organischen Verbindungen, vorzugsweise an organischen bioziden Verbindungen und insbesondere an wasserlöslichen organischen bioziden Verbindungen, im Ablaufwasser von Fassaden oder von Dächern oder von Gebäudeabtropfkanten (26).

20. Verwendung von Aktivkohle und/oder Molekularsieben, insbesondere Aktivkohle, für die Reduzierung des Gehalts an organischen Verbindungen, vorzugsweise an organischen bioziden Verbindungen und insbesondere an wasserlöslichen organischen bioziden Verbindungen, im Ablaufwasser von Fassaden, im Ablaufwasser von Dächern oder im Abtropfwasser von Gebäudeabtropfkanten.
